# EUROPEAN PATENT SPECIFICATION

(11) **EP 3 058 219 B1**
(45) Date of publication and mention of the grant of the patent: **02.05.2018**
(21) Application number: 14790505.3
(22) Date of filing: 16.10.2014
(51) Int. Cl.: F03D 7/02, F03D 7/06, F03D 7/04, F03D 3/06

(54) **SYSTEM FOR PITCH CONTROL**
PITCHKONTROLLSYSTEM
SYSTÈME POUR LA COMMANDE DE PAS

(30) Priority: 18.10.2013 DK 201370594
(43) Date of publication of application: 24.08.2016
(73) Proprietor: Mita-Teknik A/S, 8840 Rødkjærsbro (DK)
(72) Inventor: JENSEN, Torben, DK-8471 Sabro (DK)
(74) Representative: Nielsen, Leif
(86) International application number: PCT/DK2014/050337
(87) International publication number: WO 2015/055217

(56) References cited:
- EP-A1- 1 647 708
- EP-A1- 2 495 435
- EP-A1- 2 589 800
- US-A1- 2011 138 945
- US-A1- 2011 243 729

## Description

### Field of the Invention

The present invention relates to a system adapted for electric pitch control primarily for wind turbine blades, which system comprises at least a first subsystem which subsystem comprises at least one first electric motor, which motor is electrically coupled to a first electronic control device, and to a power grid, which electronic control device controls the operation of the electric motor, which electric motor comprises a shaft, which shaft is through a brake, and through a clutch driving a gear mechanism, which gear mechanism comprises at least one tooth wheel, which tooth wheel drives a tooth ring, which tooth ring is mechanically fixed to the root of a wind turbine blade for performing pitch regulation.

### Background of the Invention

Pitch control of wind turbine blades has been used for several years. Both hydraulic and electric servo systems have been used for pitch control. US 2011/243729 disclose some general aspects of a device for adjustment of a pivotally mounted rotor blade of a wind energy converter. The device comprises a first drive and a second drive that cooperate to turn the rotor blade between an operating position and a feathered position. The device further comprises a first activatable lockout connected to the rotor blade which in an activated state prevents turning of the rotor blade into the operating position, but allows turning of the rotor blade into the feathered position. Under further aspects, the invention provides a wind energy converter comprising the device and a method for adjusting a rotor blade which is pivotally mounted on a rotor hub of a wind energy converter.

### Object of the Invention

It is an object of the pending invention to improve the reliability of an electric pitch control system for wind turbines. A further object of the pending patent application is to isolate failures and continue mostly normal operation if a failure occurs in an electric pitch control system.

### Description of the Invention

This can be achieved by a system as disclosed in claim 1. Hereby it can be achieved that two parallel operating electric motors are driving the same tooth ring for the pitch control of a wind turbine blade. Because two parallel systems operate, the power that can be generated by operating only by one electric motor. But the reliability is extremely high because failure in one part of the system might let the other system operate at a slower speed, but still full operational. This increasing reliability is very important in offshore wind farms where service is difficult and probably not possible within short time so failure in a pitch control system can lead to lack of operation of the wind turbine, maybe for weeks. By parallel coupling of two electronic control devices and together with the motors, the whole control system for pitch regulation will change in the situation where one part of the system has a fault. Of course in some systems, where rapid regulation of pitch in the direction of neutral is necessary, there can be limitations in the way of operation if part of a control system is not in operation. Therefore, some limitations have to be accepted in the wind turbine operation, if one part of a pitch regulation system is not in operation. Maybe the wind turbine will not be able to operate with maximum wind speed, but will have a lower limit for shutting down than by usual operation where both pitch systems are working. By cross connection of the clutch control the first part of the system is able to communicate with the clutch of the other system. And the second part of the system will be able to communicate with the clutch of the first system. Hereby the electronic control devices can have information about the situation and therefore also the position of the clutch in the other side. In a failure system in one of the control systems or one of the motors, it is possible for the operating electronic control device to open the clutch in the other side and in that way take over the whole command and perform traditional regulation with one electronic control device and one motor. Hereby total reliability of the system is further improved.

In a further preferred embodiment of the invention the first electronic control device and the second electronic control device can perform communication over a common communication line. By the communication system between the electronic control devices it is possible for the systems to operate more or less synchronously which could be rather important for letting two different motors drive at the same tooth ring. If no synchronisation is performed power from one of the motors would probably be used for drive the other motor to an unwanted higher velocity, and therefore there would simply be a loss of power instead of achieving parallel operation. The common communication also gives the possibility that failure information can be communicated between the two electronic control devices. Also in this way one of the electronic control devices can communicate to the opposite and take over the command and perform the control by itself.

In a further preferred embodiment of the invention the system can comprise at least a third subsystem, which third subsystem comprises a third motor, which third electronic control device is coupled to the power grid, which third electronic control device controls the operation of the third motor, which third motor comprises a third shaft, which shaft is connected to a brake, which third shaft is through a third clutch driving a third gear mechanism, which third gear mechanism comprises at least one second tooth wheel, which second tooth wheel drives the tooth ring. Instead of multiplying the system by a factor two it is possible also to multiply by a factor three or maybe even more. By increasing the number of motors and electronic control devices it might be possible to distribute the pitch control into a higher number of smaller electronic devices controlling smaller motors. In this way it might be possible to build a standard electronic pitch control system that can be used in wind turbines of different sizes where the number of systems coupled parallel is depending on the power that is needed for the pitch control. In that way relative cheap, high reliable control can be performed.

In a further preferred embodiment of the invention the third electronic control device can perform control of the first or the second clutch, which first or second electronic control device performs control of the third clutch. As previously disclosed the different systems are able to control other clutches.

In a further preferred embodiment of the invention the first electronic control device, the second electronic control device and the third electronic control device can perform communication over a common communication line. The communication line will of course also be connected to the third, fourth, fifth or to the many systems operating in parallel.

In a further preferred embodiment of the invention each of the motors can be connected to encoders, which encoders communicate with the related electronic control devices. Encoders are necessary at least for synchronisation of the different motors in order to let them operate synchronously in relation to each other. But also for the electronic control device, the encoding signals are important in order to control the power that has to be used for driving the motor.

In a further preferred embodiment of the invention each of the electronic control devices can be connected to emergency energy storage, which energy storages can be coupled in parallel. Hereby it can be achieved that energy storages continuously can be charged as long as there is a power supply from the power grid. In situations where for example the power grid fails, it is possible for the electronic control devices to still be active and by motors, clutches and gear to turn the pitch of a wind turbine blade into a neutral position where the wind turbine blade has to be placed in all power down situations. It is preferred that energy storage directly coupled to the electronic control devices is also parallel coupled in a way where they can supply in common in emergency situations, where for example one of the electronic control devices or one of the motors are not operational because of fault. In that situation it is positive that still existing parts of the system are able to operate also with the power that has already been stored in one of the extra energy storages. A lot of different battery types can be used, but in the future capacitor energy storage will probably be the most effective type of energy storage having sufficient energy stored. In a preferred embodiment of the invention the energy storage can be any liquid or gas pressure storage from which energy storage the energy for emergency shutdown of the pitch control is possible.

In a further preferred embodiment of the invention it is possible that the clutch is placed between the gear and the tooth ring. Many different constructions for the clutch are possible, but a very simple clutch will by an actuator release the tooth wheel from the tooth ring and in that way uncouple the connection between the tooth wheel and the tooth ring. This primitive clutch will be sufficient in many emergency situations, where one of the components in connection with one of the motors will fail. That could be the electronic control device, the motor or maybe the brake. In all of these situations it is possible that rotation of the motor will be blocked, more or less mechanical or maybe electrical and rotation of that motor by the tooth ring will at least have an energy consumption that is unnecessary. Therefore, it is very important that the clutch in some way can disconnect any connection to the motor unit.

### Description of the Drawing

- Fig. 1: discloses one possible embodiment of the invention.
- Fig. 2: shows one further possible embodiment of the invention.

### Detailed Description of the Invention

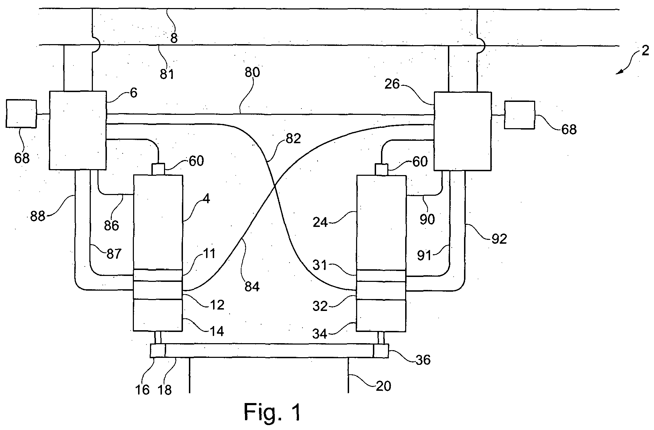

Fig. 1 shows a system 2 for pitch regulation of a wind turbine blade. The system shows one first motor 4, which motor is connected to an electronic control device 6, which device is electrically connected to a power grid 8. The first motor 4 is through a brake 11 and further through a clutch 12 driving a gear mechanism 14. The gear mechanism 14 drives a tooth wheel 16, which tooth wheel 16 is connected to a tooth ring 18, which ring 18 is fixed to the root 22 of a wind turbine blade. Furthermore, fig. 1 shows a second motor 24, which motor 24 is by connection line 90 connected to the electronic control device 26. This electronic control device 6 is further supplied from the power grid 8 and to a common wind turbine communications network 81. The motor 24 is connected to a clutch 32 into a gear mechanism 34. This gear mechanism is driving a tooth wheel 36, which tooth wheel 36 is connected to the tooth ring 18. Furthermore, fig. 1 indicates encoders 60, which encoders are connected to the electronic control devices 6 or 26. Further is indicated emergency energy storage 68 connected to the electronic power device 6 and 26. Furthermore, the electronic control device 6 and the electronic control device 26 are connected by a communication line 80. By 86 is indicated the power connection between the electronic control device 6 and the motor 4. By 88 is indicated a control line that is performing communication of control information from the electronic control device 6 towards the clutch 12. Furthermore, a line 92 is connected from the electronic control device 26 towards the clutch 32. Furthermore, clutch communications are performed from the electronic control device 6 by the line 92 to the clutch 32. Furthermore, a communication line 84 is connected to the second electronic control device 26 and to the first clutch 12.

In operation will both the motor 4 and the motor 24 be able to turn the tooth ring 18. That means that the different parts of the systems are operating in full parallel. This will of course increase the total power that can be delivered to the tooth ring 18, but the primary benefit by this invention is in emergency or failure situations were for example one of the motors 4 or 24 have a fault or one of the electronic control devices 6 or 26 have a fault. Furthermore, it is possible that one of the brakes 11,31 or 61 can have a fault so that the brake is blocked. Then it is very important that the clutch is placed after the brake so that the clutch is able to disconnect the whole section where the brake has a failure. Otherwise the brake would be able to stop any pitch control. Therefore, the possibility of having the clutch in connection with the brake makes it possible that a total mechanical disconnection will be possible. In this way it leads to further improvement of the reliability of the pitch control system.

In that situation the other electronic control devices, which are still operational will take command of the clutch of the other motor and open the clutch so that the non-functioning motor or electronic control device have no influence on the tooth ring 18. In that situation the system can continue operation even in a fault mode. The only limitation is that the total power will be limited. In fault situations where for example failure occurs on the power grid, which could occur in situations where a wind turbine is forced to power down the energy storage 68, will supply the electronic control devices 6 and 26 so that they are still able to perform control of the motors 4,24 and thereby perform a shutdown of the wind turbine, even after a total power failure of the grid. In a situation where one of the electronic devices 6 or 26 has a failure or one of the motors 4,24 has a failure, it is possible that the energy storages 68 are coupled in parallel so that in situations where one part of the system is not operational because of fault, the power stored in the energy storage can still be used at the still operating device.

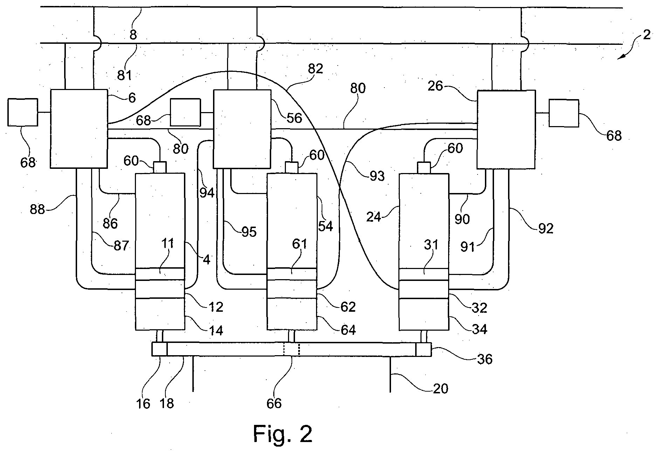

Fig. 2 mainly shows the same features as in fig. 1, but with that major difference that now the system comprises three parallel systems.

Fig. 2 shows a third motor 54, which is driven by an electronic control device 56, which motor is connected to a clutch 62 into a gear mechanism 64. Further a tooth wheel 66 indicated behind the tooth ring 18, is connected to this tooth ring 18 and can also perform rotation of the tooth ring 18. Communication line 94 from the electronic control device 56 is connected to the clutch 12. Further is a communication line 93 connected from the electronic control device 26 to the clutch 62.

Further fail-safe operation is possible in situations where the pitch control system is formed three times. Three parallel operating motors and electronic control devices will give a very high reliability for the system. This can be very important for offshore wind turbines where service is critical and only can be performed when ships or helicopters are available and when the weather situation allows service. Therefore, reliability of the pitch control system is extremely important. It is possible in some systems, maybe even to place more than the three motors indicated connected to the same rotating ring 18. In that situations even smaller motor systems can be used and the reliability will be extremely high if for example eight units are parallel operating, where for example four of them mainly operate in order to perform normal operation, but as long as two of them are in operation, maybe still some pitch control is possible but with some limitations in the operation of the wind turbine.

## Claims

1. System (2) being adapted for electric pitch control of a wind turbine, which system comprises at least a first subsystem which first subsystem (2) comprises at least one first electric motor (4), which first sub system (2) further comprises a first electronic control device (6)which first motor (4) is electrically coupled to the first electronic control device (6), which first electronic control device (6) is coupled to a power grid (8), and to a common communication network (81), which first electronic control device (6) controls the operation of the first electric motor (4), which first electric motor (4) comprises a first shaft, which first sub system (2) further comprises a first brake (11) and a first clutch (12), which first shaft is through at least the first brake (11) and through the first clutch (12) driving a first gear mechanism (14), which first gear mechanism (14) comprises at least one first tooth wheel (16), which first tooth wheel (16) drives a tooth ring (18), which tooth ring (18) is mechanically fixed to the root (20) of a wind turbine blade for performing pitch regulation, wherein the system comprises at least a second subsystem, which second subsystem comprises at least one second electric motor (24), which second motor (24) comprises a second shaft, which second sub system further comprises at least one second brake (31) and a second clutch (32) which second shaft is through at least the second brake (31) and through the second clutch (32) driving a second gear mechanism (34), which second gear mechanism (34) comprises at least one second tooth wheel (36), which second tooth wheel (36) drives the tooth ring (18), **characterized in that** the second sub-system further comprises a second electronic control device (26), which second electric motor (24) is electrically coupled to the second electronic control device (26), which second electronic control device (26) is coupled to the power grid (8) and to the common communication network (81), which second electronic control device (26) controls the operation of the second motor (24), whereby the first and the second subsystems are interconnected **in that** the first
electronic control device (6) controls the second clutch (32), which second electronic control device (26) controls the first clutch (12).

2. System according to claim 1, **characterized in that** first electronic control device (6) and the second electronic control device (26) communicate through a common communication line (80) or through common wind turbine communication networks (81).

3. System according to claim 1 or 2, **characterized in** the system (2) comprises at least a third subsystem, which third subsystem comprises a third motor (54), which third subsystem further comprises third electronic control device (56) connected to the power grid (8), and to the common wind turbine communication network (81), which third electronic control device (56) controls the operation of the third motor (54), which third motor (54) comprises a third shaft, which third subsystem further comprises a third brake (61) and a third clutch (62) which third shaft is through at least the third brake (61) and through the third clutch (62) driving a third gear mechanism (64), which third gear mechanism (64) comprises at least one third tooth wheel (66), which third tooth wheel (66) drives the tooth ring (18).

4. System according to claim 3, **characterized in that** the third electronic control device (56) controls the first (12) or the second clutch (32), which first (6) or second electronic control device (26) control the third clutch (62).

5. System according to claim 4, **characterized in that** first electronic control device (6), the second electronic control device (26) and the third electronic control device (56) communicate through a common communication network (80,81).

6. System according to one of the claims 1-5, **characterized in that** each of the motors (4,24,54) are connected to encoders (60), which encoders communicate with the electronic control devices (6,26,56).

7. System according to one of the claims 1-6, **characterized in that** each of the electronic control devices (6,26,56) are connected to energy storage (68) for emergency power supply of the motors, which energy storages (68) are coupled in parallel.

## Patentansprüche

1. System (2), das zur elektrischen Pitchsteuerung einer Windenergieanlage angepasst ist, wobei das System mindestens ein erstes Teilsystem umfasst, welches erstes Teilsystem (2) mindestens einen ersten Elektromotor (4) umfasst, welches erste Teilsystem (2) ein erstes elektronische Steuergerät (6) aufweist, welcher erster Motor (4) an dem ersten elektronische Steuergerät (6) elektrisch angeschlossen ist, wobei das erste elektronische Steuergerät (6) an einem Stromnetz (8) und einem gemeinsamen Kommunikationsnetzwerk (81) angeschlossen ist, wobei das erste elektronische Steuergerät (6) den Betrieb des ersten Elektromotors (4) steuert, wobei der erste Elektromotor (4) eine erste Welle umfasst, wobei das erste Teilsystem (2) ferner eine erste Bremse (11) und eine erste Kupplung (12) umfasst, welche erste Welle durch mindestens die erste Bremse (11) und durch die erste Kupplung (12) einen ersten Getriebemechanismus (14) antreibt, welcher erste Getriebemechanismus (14) mindestens ein erstes Zahnrad (16) aufweist, wobei das erste Zahnrad (16) einen Zahnring (18) antreibt, welcher Zahnring (18) mechanisch an der Wurzel (20) einer Windturbinenschaufel befestigt ist, um eine Pitchsteuerung durchzuführen, wobei das System mindestens ein zweites Teilsystem umfasst, wobei das zweite Teilsystem mindestens einen zweiten Elektromotor (24) umfasst, wobei der zweite Motor (24) eine zweite Welle umfasst, wobei das zweite Teilsystem ferner mindestens eine zweite Bremse (31) und eine zweite Kupplung (32) umfasst, wobei die zweite Welle durch mindestens die zweite Bremse (31) und durch die zweite Kupplung (32) eines zweiten Getriebemechanismus (34) antreibt, welcher zweite Getriebemechanismus (34) mindestens ein zweites Zahnrad (36) aufweist, wobei das zweite Zahnrad (36) den Zahnring (18) antreibt, **dadurch gekennzeichnet, daß** das zweite Teilsystem ferner eine zweites elektronisches Steuergerät (26) umfasst, wobei der zweite Elektromotor (24) elektrisch an dem zweiten elektronischen Steuergerät (26) angeschlossen ist, wobei das zweite elektronisches Steuergerät (26) an dem Stromnetz (8) und dem gemeinsamen Kommunikationsnetz (81) angeschlossen ist, welches zweite elektronische Steuergerät (26) den Betrieb des zweiten Motors (24) steuert, wobei das erste und das zweite Teilsystem dadurch miteinander verbunden sind, dass das erste elektronische Steuergerät (6) die zweite Kupplung (32) steuert, welches zweites elektronisches Steuergerät (26) die erste Kupplung steuert.

2. System nach Anspruch 1, **dadurch gekennzeichnet, dass** das erste elektronische Steuergerät (6) und das zweite elektronische Steuergerät (26) über eine gemeinsame Kommunikationsleitung (80) oder über gemeinsame Windkraftanlagen-Kommunikationsnetzwerke (81) kommunizieren.

3. System nach Anspruch 1 oder 2, **dadurch gekennzeichnet, dass** das System (2) mindestens ein drittes Teilsystem umfasst, welches dritte Teilsystem einen dritten Motor (54) umfasst, wobei das dritte Teilsystem ferner ein drittes am Stromnetz (8) und dem gemeinsamen Kommunikationsnetz (81) angeschlossenes elektronisches Steuergerät (56) umfasst, welches dritte elektronische Steuergerät (56) den Betrieb des dritten Motors (54) steuert, welcher dritte Motor (54) eine dritte Welle aufweist, welches dritte Teilsystem des Weiteren eine dritte Bremse (61) und eine dritte Kupplung (62) aufweist, welche dritte Welle über mindestens die dritte Bremse (61) und über die dritte Kupplung (62) einen dritten Getriebemechanismus (64) antreibt, welcher dritte Getriebemechanismus (64) mindestens ein drittes Zahnrad (66) umfasst, wobei das dritte Zahnrad (66) den Zahnring (18) antreibt.

4. System nach Anspruch 3, **dadurch gekennzeichnet, dass** das dritte elektronische Steuergerät (56) die erste (12) oder die zweite Kupplung (32) steuert, welches erste (6) oder zweite elektronische Steuergerät (26) die dritte Kupplung steuert (62).

5. System nach Anspruch 4, **dadurch gekennzeichnet, dass** die erste elektronische Steuergerät (6), das zweite elektronische Steuergerät (26) und das dritte elektronische Steuergerät (56) über ein gemeinsames Kommunikationsnetzwerk (80, 81) kommunizieren.

6. System nach einem der Ansprüche 1 bis 5, **dadurch gekennzeichnet, dass** jeder der Motoren (4, 24, 54) mit Encodern (60) verbunden ist, welche Encodern mit den elektronischen Steuergeräten (6, 26, 56) kommunizieren.

7. System nach einem der Ansprüche 1 bis 6, **dadurch gekennzeichnet, dass** jede der elektronischen Steuergeräte (6, 26, 56) mit einem Energiespeicher (68) zur Notstromversorgung der Motoren verbunden ist, welche Energiespeicher (68) parallel geschaltet sind.

## Revendications

1. Système (2) adapté à la commande de pas électrique d'une éolienne, lequel système comprend au moins un premier sous-système, lequel premier sous-système (2) comprend au moins un premier moteur électrique (4), lequel premier sous-système (2) comprend en outre un premier dispositif de commande électronique (6) lequel premier moteur (4) est couplé électriquement au premier dispositif de commande électronique (6), lequel premier dispositif de commande électronique (6) est couplé à un réseau électrique (8), et à un réseau commun de communication (81), lequel premier dispositif de commande électronique (6) commande le fonctionnement du premier moteur électrique (4), lequel premier moteur électrique (4) comprend un premier arbre, lequel premier sous-système (2) comprend en outre un premier frein (11) et un premier embrayage (12), lequel premier arbre passe à travers au moins le premier frein (11) et à travers le premier embrayage (12) entraînant un premier mécanisme d'engrenage (14), lequel premier mécanisme d'engrenage (14) comprend au moins une première roue dentée (16), laquelle première roue dentée (16) entraîne une couronne dentée (18), laquelle couronne dentée (18) est fixée mécaniquement à la racine (20) d'une pale d'éolienne pour effectuer une régulation de pas, dans lequel le système comprend au moins un second sous-système, lequel second sous-système comprend au moins un second moteur électrique (24), lequel second moteur (24) comprend un second arbre, lequel second sous-système comprend en outre au moins un second frein (31) et un second embrayage (32) le second arbre passant à travers au moins le second frein (31) et à travers le second embrayage (32) entraînant un second mécanisme d'engrenage (34), lequel second mécanisme d'engrenage (34) comprend au moins une seconde roue dentée (36), ladite seconde roue dentée (36) entraînant la couronne dentée (18), **caractérisé en ce que** le second sous-système comprend en outre un second dispositif de commande électronique (26), lequel second moteur électrique (24) est couplé électriquement au second dispositif de commande électronique (26), lequel second dispositif de commande électronique (26) est couplé au réseau électrique (8) et au réseau commun de communication (81), lequel second dispositif de commande électronique (26) commande le fonctionnement du second moteur (24), les premier et second sous-systèmes étant interconnectés **en ce que** le premier dispositif de commande électronique (6) commande le second embrayage (32), lequel second dispositif de commande électronique (26) commande le premier embrayage (12).

2. Système selon la revendication 1, **caractérisé en ce que** le premier dispositif de commande électronique (6) et le second dispositif de commande électronique (26) communiquent par l'intermédiaire d'une ligne commune de communication (80) ou par l'intermédiaire de réseaux communs de communication de turbine éolienne (81).

3. Système selon la revendication 1 ou 2, **caractérisé en ce que** le système (2) comprend au moins un troisième sous-système, lequel troisième sous-système comprend un troisième moteur (54), lequel troisième sous-système comprend en outre un troisième dispositif de commande électronique (56) connecté au réseau électrique (8), et au réseau commun de communication de turbine éolienne (81), lequel troisième dispositif de commande électronique (56) commande le fonctionnement du troisième moteur (54), lequel troisième moteur (54) comprend un troisième arbre, lequel troisième sous-système comprend en outre un troisième frein (61) et un troisième embrayage (62) lequel troisième arbre passe à travers au moins le troisième frein (61) et à travers le troisième embrayage (62) entraînant un troisième mécanisme d'engrenage (64), lequel troisième mécanisme d'engrenage (64) comprend au moins une troisième roue dentée (66), laquelle troisième roue dentée (66) entraîne la couronne dentée (18).

4. Système selon la revendication 3, **caractérisé en ce que** le troisième dispositif de commande électronique (56) commande le premier (12) ou le deuxième embrayage (32), lequel premier (6) ou deuxième dispositif de commande électronique (26) commande le troisième embrayage (62).

5. Système selon la revendication 4, **caractérisé en ce que** le premier dispositif de commande électronique (6), le deuxième dispositif de commande électronique (26) et le troisième dispositif de commande électronique (56) communiquent par l'intermédiaire d'un réseau commun de communication (80,81).

6. Système selon l'une des revendications 1 à 5, **caractérisé en ce que** chacun des moteurs (4,24,54) sont connectés à des codeurs (60), lesquels codeurs communiquent avec les dispositifs de commande électronique (6,26,56).

7. Système selon l'une des revendications 1 à 6, **caractérisé en ce que** chacun des dispositifs électroniques de commande (6,26,56) sont connectés à un stockage d'énergie (68) pour l'alimentation électrique d'urgence des moteurs, lesquels accumulateurs d'énergie (68) sont couplés en parallèle.
